# EUROPEAN PATENT APPLICATION

(11) **EP 4 557 027 A1**
(43) Date of publication of application: **21.05.2025**
(21) Application number: 23839536.2
(22) Date of filing: 04.07.2023
(51) Int. Cl.: G05B 19/05

(54) **LADDER PROGRAM EDITING DEVICE, EDITING METHOD, AND EDITING PROGRAM**

(30) Priority: 15.07.2022 JP 2022114133
(71) Applicant: OMRON Corporation, Kyoto 600-8530 (JP)
(72) Inventor: FUJIMURA, Ryosuke, Kyoto-shi, Kyoto 600-8530 (JP); SHIRANE, Kakuto, Kyoto-shi, Kyoto 600-8530 (JP); ABE, Yutaka, Kyoto-shi, Kyoto 600-8530 (JP); OKAYASU, Takahiro, Kyoto-shi, Kyoto 600-8530 (JP); NAGAO, Kenjiro, Kyoto-shi, Kyoto 600-8530 (JP); KISHI, Yoshifumi, Kyoto-shi, Kyoto 600-8530 (JP); NAKAGAWA, Tsukasa, Kyoto-shi, Kyoto 600-8530 (JP)
(74) Representative: Becker, Eberhard
(86) International application number: PCT/JP2023/024821
(87) International publication number: WO 2024/014364

(57) **Abstract**

The present invention enables circuit components to be arranged efficiently even by a user who is not skilled in operation. The present invention comprises: a guide display control unit (12) for performing control to display options for each processing step for adding circuit components at prescribed positions with respect to position designations by a user in an editing region where the circuit components of a ladder program are displayed; a selection reception unit (13) for receiving a user input for selecting one of the options; and an application unit (14) for adding, to the ladder program, the circuit components in accordance with the processing steps.

## Description

### Technical Field

The present invention relates to a ladder program editing device.

### Related Art

Generally, programs are developed through IDE (Integrated Development Environment). In IDEs, to reduce the amount of user input, an input assistance function is incorporated that complements the input content based on the information entered.

In FA (Factory Automation) systems, PLCs (Programmable Logic Controllers) are often used. Regarding PLC programming languages, there are five languages specified in IEC61131-3.

Among these, the ladder language is characterized by graphically developing programs, creating a pseudo-relay circuit by program that places multiple contacts, coils, and instructions between bus bars.

For example, Patent Literature 1 discloses a ladder diagram program creation support device for improving the creation and editing efficiency of ladder programs where the same ladder circuit or similar ladder circuits appear repeatedly. In this ladder diagram program creation support device, a partial circuit search unit searches for and extracts a partial circuit corresponding to the ladder circuit of the input command name. A display part 4 outputs input candidates corresponding to the partial circuit extracted by the partial circuit search unit. When a replacement processing unit receives the selection of an input candidate output by the display part, it replaces the ladder circuit where the command name was input in an input operation unit with the selected input candidate.

### Citation List

### Patent Literature

Patent Literature 1: Japanese Patent Application Laid-Open Publication No. 2019-159893

### SUMMARY OF INVENTION

### Technical Problem

In ladder language, it is necessary to appropriately designate the position to place circuit components (program components) such as contacts, coils, and instructions. However, the user interface for placing circuit components is unique to each manufacturer and is not standardized. In other words, the method of placing circuit components and the keyboard shortcut keys for this purpose differ for each manufacturer. As a result, users need to become familiar with the user interface of each manufacturer individually, and the efficiency of program creation decreases when using an unfamiliar IDE.

Moreover, to enable users who do not remember shortcut keys to create programs, some commands have their shortcut keys displayed on the screen. However, these shortcut keys are displayed in an area outside the program editing region, causing the user's line of sight to move. As a result, users cannot concentrate on program creation, resulting in inefficiency.

Therefore, one aspect of the present invention aims to provide a ladder program editing device that allows users who are not proficient in operation to efficiently place circuit components.

### Solution to Problem

To solve the above problem, a ladder program editing device according to one aspect of the present invention includes: a position detection unit that detects a position designation input by a user within an editing region where a circuit component of a ladder program is displayed; a guide display control unit that performs control to display options for each of processing steps for adding the circuit component at a prescribed position based on a designated position detected by the position detection unit; a selection reception unit that receives a user input selecting one of the options; and an application unit that adds the circuit component to the ladder program based on the user input received by the selection reception unit in each of the processing steps.

To solve the above problem, an editing method for a ladder program according to another aspect of the present invention includes: a position detection step of detecting a position designation input by a user within an editing region where a circuit component of a ladder program is displayed; a guide display control step of performing control to display options for each of processing steps for adding the circuit component at a prescribed position based on a designated position detected by the position detection step; a selection reception step of receiving a user input selecting one of the options, and an application step of adding the circuit component to the ladder program based on the user input received by the selection reception step in each of the processing steps.

According to the above configuration, options for a user to select are displayed at a prescribed position based on a designated position designated by the user within an editing region where a circuit component of a ladder program is displayed. Therefore, there is no need to move one's line of sight to a menu bar or the like outside the editing region, allowing the user to concentrate on programming. Furthermore, since the user only needs to select from the options, even users who are not proficient in operation can efficiently place circuit components.

### Effects of Invention

According to one aspect of the present invention, even users who are not proficient in operation can easily and efficiently place circuit components.

### BRIEF DESCRIPTION OF DRAWINGS

[FIG. 1] A block diagram showing the configuration of main parts of a ladder program editing device.
[FIG. 2] A flowchart showing an operation example of adding a circuit component in the ladder program editing device according to Embodiment 1.
[FIG. 3] An example of an editing region where options for designating the position to add a circuit component are displayed by the guide display control unit.
[FIG. 4] An example of an editing region where options for designating the type of circuit components are displayed by the guide display control unit.
[FIG. 5] An example of an editing region where the circuit component of a received type has been added to the received position by the application unit.
[FIG. 6] A flowchart showing an operation example of moving a connection line in the ladder program editing device according to Embodiment 1.
[FIG. 7] An example of an editing region where options for designating whether to change the connection line are displayed by the guide display control unit.
[FIG. 8] An example of an editing region where options for designating the position to change the connection of the connection line are displayed by the guide display control unit.
[FIG. 9] An example of an editing region where the connection line has been changed to the received position by the application unit.
[FIG. 10] An example showing the editing region before changing the connection line.
[FIG. 11] An example where the connection destination of a certain connection line has been changed in relation to FIG. 10.
[FIG. 12] An example where the connection destination of yet another connection line has been changed in relation to FIG. 11.

### DESCRIPTION OF THE EMBODIMENTS

### [Embodiment]

The following describes an embodiment related to one aspect of the present invention (hereinafter also referred to as "this embodiment") based on the drawings. In the drawing, the same or equivalent parts are given the same reference numerals, and the descriptions thereof are not repeated.

### §1. Application Example

In ladder language, a program is created by placing contacts, coils and instructions (functions or function blocks) between bus bars and connecting circuits. Therefore, in ladder language, the process of placing circuit components and connecting connection lines is necessary.

In the placement of circuit components, the user designates the relative positional relationship to existing circuit components. In this embodiment, when a circuit component is selected, an input assistance display that assists the user's input is displayed around the selected circuit component. There are two steps for this input assistance display: the first step of adding a new circuit component in which position (up, down, left, or right) relative to the circuit component, and the second step of adding what kind of circuit component to that position. Moreover, keyboard shortcuts may be displayed in the input assistance display. Keyboard shortcuts are keyboard keys used to execute commands displayed on the screen without pointing operations, using only keyboard operations.

Furthermore, connection lines connect between existing circuit components. In this embodiment, when a connection line is selected, an input assistance display that assists the user's input is displayed at positions where the connection destination of the connection line may be changed. There are two steps for the input assistance display: the first step is to confirm whether to change the connection destination of the connection line, and the second step is to designate a specific position for changing the connection destination of the connection line. Moreover, keyboard shortcuts may be displayed in the input assistance display.

The input assistance display is displayed at a prescribed position based on the designated position. With the input assistance display, even users who are not familiar with keyboard shortcuts and the operation methods of the IDE itself can easily understand how to operate. Furthermore, since the input assistance display is shown in the editing region of the IDE, it requires less eye movement for the user compared to toolbars displayed outside the editing region, enabling more efficient program development. Here, the editing region is the region where the ladder program is displayed.

### §2. Configuration Example

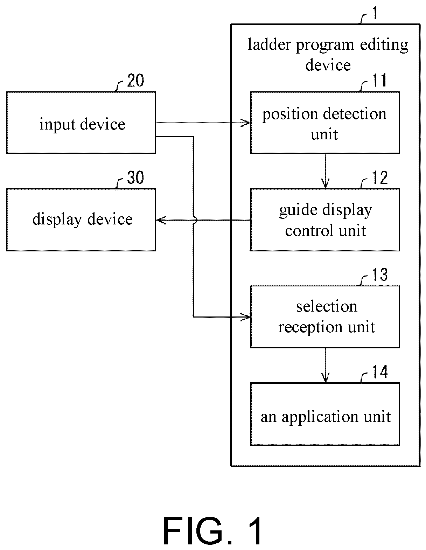

FIG. 1 is a block diagram showing the configuration of main parts of a ladder program editing device 1. The ladder program editing device 1 includes a position detection unit 11, a guide display control unit 12, a selection reception unit 13, and an application unit 14. Moreover, the ladder program editing device 1 is connected to an input device 20 such as a mouse and keyboard, and a display device 30 such as a display.

### (Ladder Program Editing Device 1)

The position detection unit 11 detects the user's position designation input using the input device 20 within the editing region where circuit components of the ladder program are displayed. Specifically, the user selects a circuit component of the ladder program using mouse input or arrow key input on the keyboard. In the case where the editing region uses a cell-based system, the user selects a cell, and the position detection unit 11 takes the selected cell as the designated position.

The selected circuit components are circuit components for arithmetic such as contacts, coils, functions, and function blocks.

The guide display control unit 12 performs control to display options for each of processing steps for adding circuit components on the display device 30 at a prescribed position based on the designated position detected by the position detection unit 11. Details regarding this will be described later.

The selection reception unit 13 receives user input selecting one of the options displayed by the guide display control unit 12. Details regarding this will also be described collectively later.

The application unit 14 adds circuit components to the ladder program based on the user input received by the selection reception unit 13.

### §3. Operation Example

### (Addition of Circuit Components)

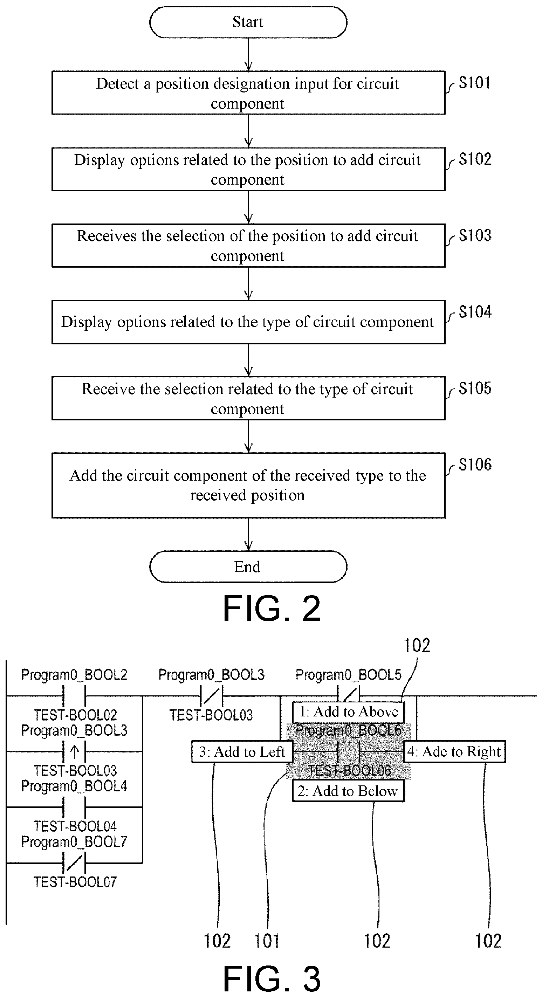

FIG. 2 is a flowchart showing an operation example of adding a circuit component in the ladder program editing device 1 according to the Embodiment 1.

The position detection unit 11 detects a position designation input for existing circuit components such as contacts, coils and instructions (S101). Subsequently, the guide display control unit 12 displays options for designating the position to add circuit components at a prescribed position based on the designated position, for example, in the vicinity around existing circuit components such as contacts, coils and instructions (S102). The guide display control unit 12 may also perform control to display options within a prescribed distance range based on the designated position. The prescribed distance range may be, for example, a position in contact with the outer periphery of the designated circuit component, or within a prescribed distance range shorter than the vertical or horizontal width of the circuit component from the outer periphery of the designated circuit component.

FIG. 3 is an example of an editing region where options for designating the position to add a circuit component are displayed by the guide display control unit 12. In FIG. 3, the position detection unit 11 detects a circuit component 101 as the designated position. The guide display control unit 12 displays a guide 102 designating the position to add circuit components around the circuit component 101. The guide 102 is displayed respectively above, below, to the left, and to the right of the circuit component 101. However, if the circuit component 101 is a coil, the guide 102 on the right side may be omitted. Moreover, the guide 102 may be displayed as semi-transparent, allowing the figures and characters underneath to be seen through.

The guide 102 above is displayed as "Add to Above", the guide 102 below is displayed as "Add to Below", the guide 102 on the left is displayed as "Add to Left", and the guide 102 on the right is displayed as "Add to Right". Here, to make it visually easy to understand, the guide 102 is displayed above, below, to the left, and to the right of the circuit component 101, but it is not limited thereto, and any display format located in the editing region of the ladder program may be adopted.

In addition to displaying the function of each guide 102, information related to keyboard shortcuts for selecting the guide 102 by keyboard input may be added to each guide 102.

The selection reception unit 13 receives the selection of the position to add circuit components (S103). Specifically, when the selection reception unit 13 receives a mouse click on the guide 102 or input of a keyboard shortcut via the keyboard, it receives that the corresponding guide 102 has been selected. This is not limited to mouse clicks, and may be input from any pointing device, for example, input via a touch panel.

The guide display control unit 12 removes other guides 102 while keeping the guide 102 selected by the selection reception unit 13. Subsequently, the guide display control unit 12 displays options related to the type of circuit component (S104).

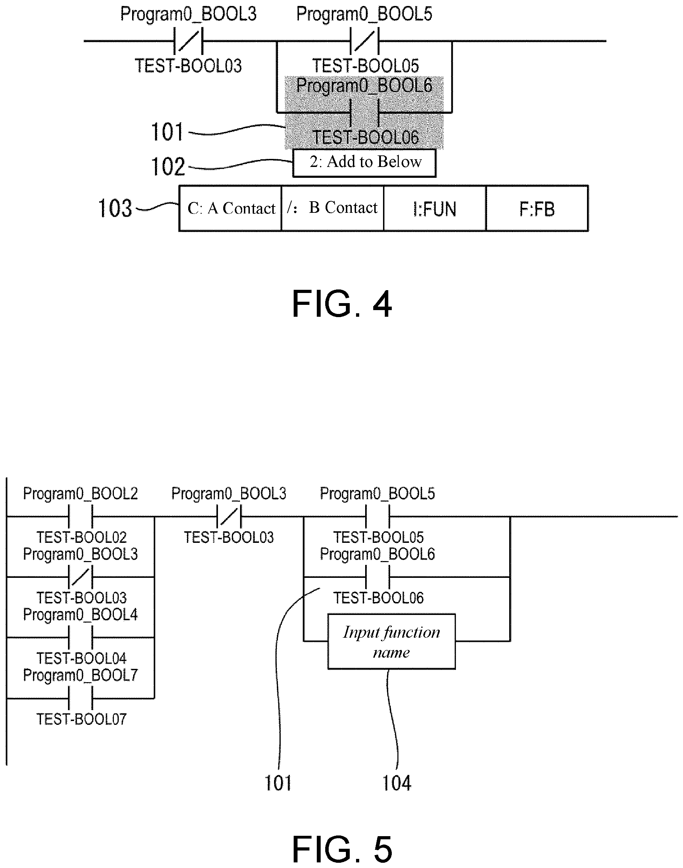

FIG. 4 is an example of an editing region where options for designating the type of circuit components are displayed by the guide display control unit 12. In FIG. 4, the guide display control unit 12 displays a guide 103 designating the type of circuit component around the circuit component 101. The guide 103 is displayed outside the circuit component 101 with the guide 102 in between. For example, in FIG. 4, because "Add Below" was selected for the guide 102, the guide 103 is also displayed further below the guide 102.

The types of guide 103 include "A Contact", "B Contact", "FUN", and "FB". Here, "FUN" means function, and "FB" means function block. Moreover, "Coil" may also be displayed as an option.

The selection reception unit 13 receives the selection related to the type of circuit component (S105). The input method to the selection reception unit 13 is similar to that in S103.

The application unit 14 removes the display of the guide 102 and the guide 103, and adds the circuit component of the received type to the received position with respect to the circuit component 101 (S106).

FIG. 5 is an example of an editing region where the circuit component of a received type has been added to the received position by the application unit 14. As shown in FIG. 5, the application unit 14 has added a circuit component of the received type (in this case, a function) to the position (in this case, below the circuit component 101) where a circuit component 104 is received.

### (Change of Connection Lines)

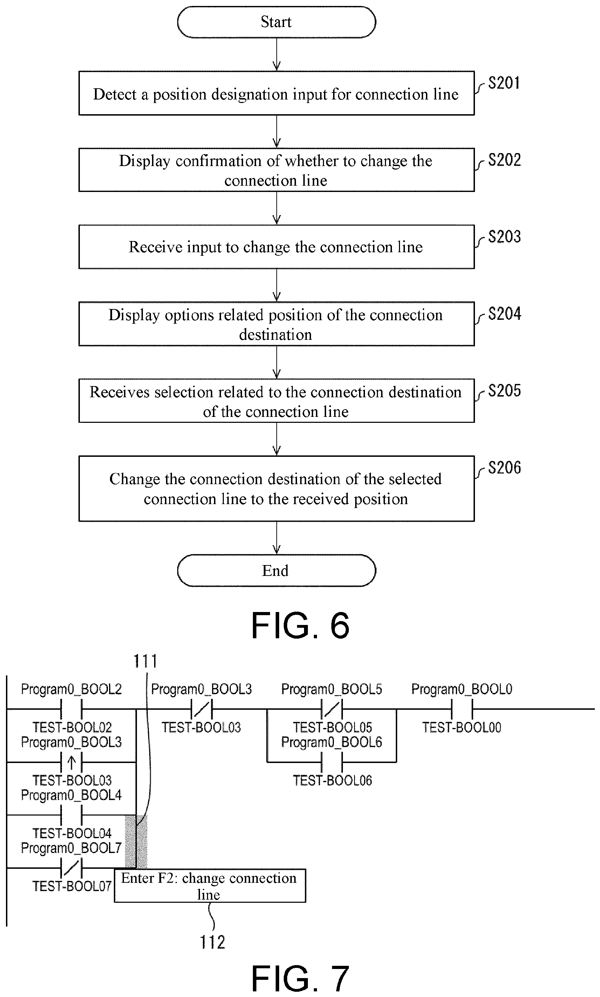

FIG. 6 is a flowchart showing an operation example of moving a connection line in the ladder program editing device 1 according to the Embodiment 1.

The position detection unit 11 detects a position designation input for a circuit component that is an existing connection line (S201). Subsequently, the guide display control unit 12 displays options for designating whether to change the connection line at a prescribed position based on the designated position, for example, in the vicinity of the circuit component that is the existing connection line (S202). The options may display only the change of the connection line, or may display options such as deleting the connection line. The prescribed position may be within a prescribed distance range.

FIG. 7 is an example of an editing region where options for designating whether to change the connection line are displayed by the guide display control unit 12. In FIG. 7, the position detection unit 11 has detected a connection line 111 as the designated position. The guide display control unit 12 displays a guide 112 in the vicinity of the connection line 111 to designate whether to change the connection line. Keyboard shortcuts may be displayed in the guide 112.

The selection reception unit 13 receives the selection of whether to change the connection line (S203). The input method for the selection reception unit 13 is similar to that in S103.

The guide display control unit 12 removes the display of the guide 112 and displays a guide 113 at positions where the connection destination of the connection line 111 may be changed (S204). The positions where the connection destination may be changed are appropriately displayed from the point of intersection of other connection lines.

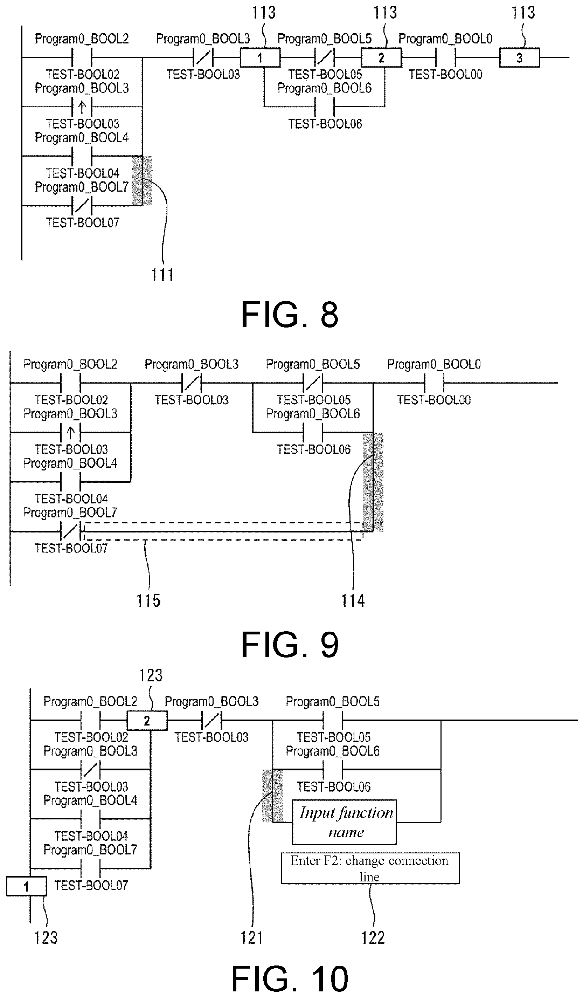

FIG. 8 is an example of an editing region where options for designating the position to change the connection of the connection line are displayed by the guide display control unit 12. In FIG. 8, the guide display control unit 12 displays the guide 113 at positions where the connection destination of the connection line 111 may be changed. Moreover, the guide 113 may be displayed as semi-transparent, allowing the underlying figures and characters to be seen through.

Here, the guide display control unit 12 determines, for each equipotential point on the circuit, whether it may be a destination for changing the connection destination of the connection line, and displays the guide 113 in the case where it may be a destination for changing the connection destination of the connection line. Therefore, the guide 113 is not displayed at positions where the connection of the connection line 111 cannot be changed, which can prevent users who are not proficient in creating control programs from making programming mistakes.

The selection reception unit 13 receives the designation of the position to change the connection destination of the connection line (S205). The input method for the selection reception unit 13 is similar to that in S103.

The application unit 14 removes the display of the guide 113 and changes the connection destination of the connection line 111 (S206).

FIG. 9 is an example of an editing region where the connection line has been changed to the received position by the application unit 14. As shown in FIG. 9, the connection line 111 has had its connection destination changed and has become a connection line 114. Therefore, a connection line 115 has been newly and automatically added. As a result, even in cases where a plurality of inputs were previously required to change the connection of circuit components, it is now possible to change the connection with a single action.

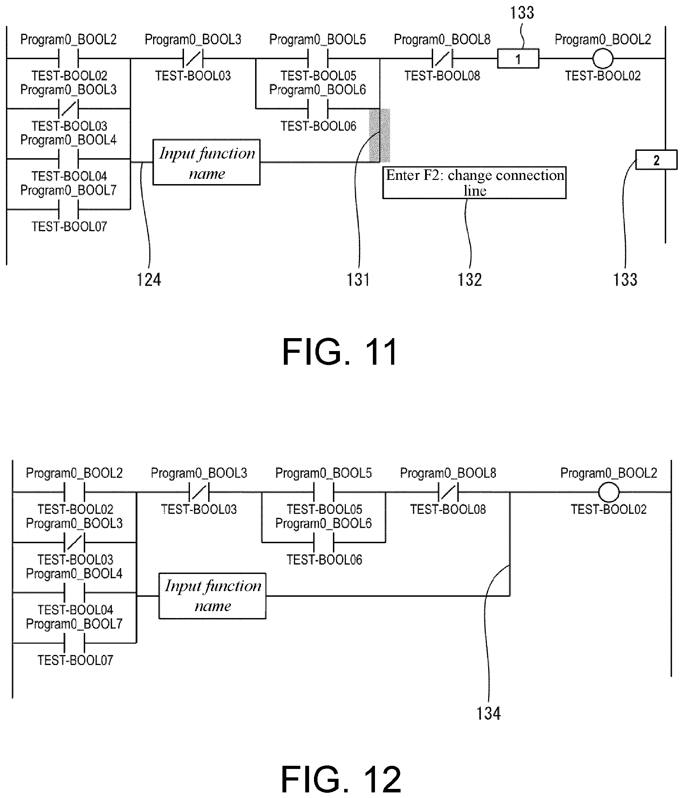

Another example of changing connection lines is shown in Figures 10 to 12. FIG. 10 is an example showing an editing region before changing a connection line. FIG. 11 is an example where the connection destination of a certain connection line has been changed in relation to FIG. 10. FIG. 12 is an example where the connection destination of yet another connection line has been changed in relation to FIG. 11.

In FIG. 10, by selecting a connection line 121, a guide 122 is displayed. By selecting the guide 122, a guide 123 is displayed. When selecting the guide with the keyboard shortcut "2" among the guide 123, the circuit in FIG. 10 becomes like the one in FIG. 11. In this case, the connection line 121 is changed to a connection line 124.

In FIG. 11, by selecting a connection line 131, a guide 132 is displayed. By selecting the guide 132, a guide 133 is displayed. When selecting the guide with the keyboard shortcut "1" among the guide 133, the circuit in FIG. 11 becomes like the one in FIG. 12. In this case, the connection line 131 is changed to a connection line 134.

In this manner, by changing the connection destination of connection lines several times consecutively, it is easy to rearrange the connection state to one that is significantly different from the original connection state of the circuit components.

### §4. Function and Effect

Because guides 102, 103, 112, and 113 that prompt user input are displayed within the editing region where circuit components of the ladder program are displayed, even users who are not proficient in operation can efficiently place circuit components or change connection lines. Furthermore, by being able to display positions where placement of circuit components and changes to connection lines are possible, even in cases where one is not proficient in programming, operations can be made easier, enabling easy program creation.

Moreover, because the guide 102, the guide 103, the guide 112, and the guide 113 are displayed within a prescribed distance range of existing circuit components, the user's line of sight does not need to move significantly. As a result, users can concentrate on programming, resulting in efficiency.

The selection of the guide 102, the guide 103, the guide 112, and the guide 113 may be done through user input by keyboard or pointing device operations. Therefore, it can be easily operated. Especially in keyboard operations, since it only requires inputting the key corresponding to the keyboard shortcut displayed on the guide102, the guide 103, the guide 112, and the guide 113, there is no need to memorize dedicated shortcut keys. As a result, the learning cost required to become proficient in operations can be reduced.

### [Modification Example 1]

Mouse gestures may be used to perform processing similar to the placement of circuit components in the embodiment. For example, by clicking on an existing circuit component, a clock menu may be displayed as a guide display (options) in a circular shape centered on the clicked position. The clock menu may be, for instance, divided into 16 equal parts by angle, with four menus in each direction of up, down, left, and right being largely divided into one block. Each block may be assigned "A Contact", "B Contact", "Function", and "Function Block" respectively. By pressing and dragging the pointing device in the direction of the position and type of circuit component to be placed, and then releasing it (dropping), the designated circuit component may be placed at the designated position.

In the embodiment, the placement of circuit components was designated in relation to the relative position of either existing contacts, coils, or instructions, but it is not limited thereto.

For example, the mouse gesture may be performed at any position where no circuit component is placed. In this case, the placement position of the circuit component is the clicked position. Therefore, since there is no need to designate the placement position of the circuit component, the number of items in the clock menu may be increased. In other words, in addition to basic items such as "A Contact", "B Contact", "Function", and "Function Block" in the clock menu, frequently used circuit components (for example, timers, counters, etc.) may be registered according to user settings.

### [Modification Example 2]

It is assumed that the arrangement of existing circuit components is changed, and AND conditions or OR conditions are rearranged using existing circuit components.

When designating the position of existing contacts and functions as circuit components, "Switch Circuit Components" may be added to the displayed guide (options). If this "Switch Circuit Components" is selected, the positions of the circuit component at the clicked position and the position-designated circuit component are switched. In this case, only the circuit components are switched, and the connection of the connection lines is not changed. In other words, the position-designated circuit component becomes connected to the connection line of the selected circuit component. Also, when switching circuit components, OR circuits may be switched as a whole block.

Moreover, this is not limited to "Switch Circuit Components" by the guide menu, but may also be performed by drag and drop using a pointing device, for example.

Furthermore, when designating the position of a circuit component, options may be displayed as a guide by simultaneously pressing the "Shift key (or Ctrl key)", and "Switch Circuit Components" may be performed using a keyboard shortcut.

### [Modification Example 3]

It has been shown that when changing the connection destination of an existing connection line, the connectable positions are displayed as a guide. In addition to the guide, the connection destination of the position-designated connection line may be changed to the next left or right connectable position by simultaneously pressing "Shift key (or Ctrl key) + left/right arrow keys". In this case, when rearranging connection lines, the operation is primarily based on the arrow keys rather than letter keys or numeric keypad keys, allowing for efficient rearrangement of connection lines. Furthermore, as a guide, a display may be provided that indicates that the connection destination of the connection line can be changed by "Shift key (or Ctrl key) + left/right arrow keys".

### [Summary]

To solve the above problem, a ladder program editing device according to one aspect of the present invention includes: a position detection unit that detects a position designation input by a user within an editing region where a circuit component of a ladder program is displayed; a guide display control unit that performs control to display options for each of processing steps for adding the circuit component at a prescribed position based on a designated position detected by the position detection unit; a selection reception unit that receives a user input selecting one of the options; and an application unit that adds the circuit component to the ladder program based on the user input received by the selection reception unit in each of the processing steps.

To solve the above problem, an editing method for a ladder program according to another aspect of the present invention includes: a position detection step of detecting a position designation input by a user within an editing region where a circuit component of a ladder program is displayed; a guide display control step of performing control to display options for each of processing steps for adding the circuit component at a prescribed position based on a designated position detected by the position detection step; a selection reception step of receiving a user input selecting one of the options; and an application step of adding the circuit component to the ladder program based on the user input received by the selection reception step in each of the processing steps.

According to the above configuration, options for a user to select are displayed at a prescribed position based on a designated position designated by the user within an editing region where a circuit component of a ladder program is displayed. Therefore, there is no need to move one's line of sight to a menu bar or the like outside the editing region, allowing the user to concentrate on programming. Furthermore, since the user only needs to select from the options, even users who are not proficient in operation can efficiently place circuit components.

There may be a plurality of the processing steps, and the guide display control unit may perform control to display the new options in response to the selection reception unit selecting the options in the prescribed processing step.

According to the above configuration, it is possible to structure the processing steps in a plurality of stages, enabling complex operations to be performed. Furthermore, even complex processes are broken down into simple processes and displayed, thus providing the user with an interface that is easy to understand.

The processing steps may include a first processing step and a second processing step performed following the first processing step, in which the first processing step may select a position to add the circuit component to the ladder program, and the second processing step may select a type of the circuit component.

According to the above configuration, the user may select the type of circuit component to be placed after determining the position relative to the reference designated position. In other words, since the designation of position and the selection of circuit components may be realized through two consecutive simple processing steps, an efficient and user-friendly interface can be provided to the user.

The designated position detected by the position detection unit may be a position corresponding to the circuit component.

According to the above configuration, the circuit component may be placed at a corresponding position based on an existing circuit component. Therefore, the operation of placing circuit components can be facilitated.

In the case where the designated position detected by the position detection unit is a position corresponding to a connection line, the application unit may change a connection destination of the connection line corresponding to the designated position based on a user input received by the selection reception unit.

According to the above configuration, by designating the position of an existing connection line, the connection destination of the connection line may be changed. Moreover, it is possible to display positions that may serve as connection destinations of the connection line as options, allowing even users who are not proficient in operation to easily create programs.

The guide display control unit may perform control to display the options within a prescribed distance range from the designated position detected by the position detection unit.

According to the above configuration, even within editing region, the options are displayed within a prescribed distance range from the designated position, allowing the user to confirm the options without moving their line of sight. As a result, the user can concentrate on programming.

The guide display control unit may perform control to display, in the options, information indicating keys of a keyboard to be used as the user input.

According to the above configuration, the circuit component may be placed using only keyboard operation, enabling efficient program creation.

The selection reception unit may receive, as the user input, a pointing operation to a position where the options are displayed.

According to the above configuration, the position to place the circuit components may be visually input by a pointing operation, which can prevent placement mistakes. Therefore, even users who are not proficient in operation can easily create programs.

The ladder program editing device according to each aspect of the present invention may be realized by a computer. In this case, a program for a ladder program editing device that realizes the ladder program editing device on a computer by causing the computer to operate as each part (software element) included in the ladder program editing device, and a computer-readable recording medium recording the program, also fall within the scope of the present invention.

### [Example of Realization by Software]

The functions of the ladder program editing device 1 (hereinafter referred to as "device") may be realized by a program that causes a computer to function as the device, specifically a program that causes a computer to function as each control block of the device.

In this case, the above device includes a computer having at least one control device (e.g. a processor) and at least one storage device (e.g. memory) as hardware for executing the above program. By executing the above program with the control device and the storage device, each function described in the above embodiments is realized.

The above program may be recorded on one or more computer-readable recording media, not temporarily. This recording medium may or may not be included in the above device. In the latter case, the above program may be supplied to the above device through any wired or wireless transmission medium.

Moreover, it is possible to realize part or all of the functions of the above control blocks by logic circuits. For example, an integrated circuit with logic circuits formed to function as the above control blocks is also included in the scope of the present invention. Moreover, it is also possible to realize the functions of the above control blocks by, for example, a quantum computer.

Furthermore, each process described in the above embodiments may be executed by AI (Artificial Intelligence). In this case, the AI may run on the above control device, or it may run on another device (e.g. an edge computer or a cloud server, etc.).

### [Additional Remarks]

The present invention is not limited to the above-described embodiments, and various changes are possible within the scope shown in the claims. Embodiments obtained by appropriately combining technical means disclosed in different embodiments are also included in the technical scope of the present invention.

### Reference Signs List

1 Ladder program editing device
11 Position detection unit
12 Guide display control unit
13 Selection reception unit
14 Application unit
20 Input device
30 Display device

## Claims

1. A ladder program editing device, comprising:
a position detection unit that detects a position designation input by a user within an editing region where a circuit component of a ladder program is displayed;
a guide display control unit that performs control to display options for each of processing steps for adding the circuit component at a prescribed position based on a designated position detected by the position detection unit;
a selection reception unit that receives a user input selecting one of the options; and
an application unit that adds the circuit component to the ladder program based on the user input received by the selection reception unit in each of the processing steps.

2. The ladder program editing device according to claim 1,
wherein there are a plurality of the processing steps, and
the guide display control unit performs control to display the new options in response to the selection reception unit selecting the options in the prescribed processing step.

3. The ladder program editing device according to claim 1,
wherein the processing steps comprise a first processing step, and a second processing step performed following the first processing step,
the first processing step selects a position to add the circuit component to the ladder program, and
the second processing step selects a type of the circuit component.

4. The ladder program editing device according to claim 1,
wherein the designated position detected by the position detection unit is a position corresponding to the circuit component.

5. The ladder program editing device according to claim 1,
wherein in a case where the designated position detected by the position detection unit is a position corresponding to a connection line,
the application unit changes a connection destination of the connection line corresponding to the designated position based on a user input received by the selection reception unit.

6. The ladder program editing device according to claim 1,
wherein the guide display control unit performs control to display the options within a prescribed distance range from the designated position detected by the position detection unit.

7. The ladder program editing device according to any one of claims 1 to 6,
wherein the guide display control unit performs control to display, in the options, information indicating keys of a keyboard to be used as the user input.

8. The ladder program editing device according to any one of claims 1 to 6,
wherein the selection reception unit receives, as the user input, a pointing operation to a position where the options are displayed.

9. An editing method for a ladder program, the editing method comprising:
a position detection step of detecting a position designation input by a user within an editing region where a circuit component of a ladder program is displayed;
a guide display control step of performing control to display options for each of processing steps for adding the circuit component at a prescribed position based on a designated position detected by the position detection step;
a selection reception step of receiving a user input selecting one of the options; and
an application step of adding the circuit component to the ladder program based on the user input received by the selection reception step in each of the processing steps.

10. An editing program for causing a computer to function as the ladder program editing device according to claim 1, the editing program causing the computer to function as the position detection unit, the guide display control unit, the selection reception unit, and the application unit.
